# EUROPEAN PATENT APPLICATION

(11) **EP 4 101 697 A1**
(43) Date of publication of application: **14.12.2022**
(21) Application number: 22177654.5
(22) Date of filing: 07.06.2022
(51) Int. Cl.: B60Q 3/74, B60Q 3/76, B60Q 3/60, B60Q 3/10, B60K 35/00

(54) **INTERIOR ILLUMINATING ASSEMBLY, INTERIOR DECORATION SYSTEM, VEHICLE AND ILLUMINATING METHOD**

(30) Priority: 08.06.2021 CN 202110636845
(71) Applicant: Faurecia (China) Investment Co., Ltd., Shanghai 201100 (CN)
(72) Inventor: WANG, HUIDONG, Shanghai (CN); PENG, ZIXUAN, Shanghai (CN); LI, YUNFENG, Shanghai (CN)
(74) Representative: Prinz & Partner mbB

(57) **Abstract**

This disclosure relates to an interior illuminating assembly (10), an interior decoration system, a vehicle and an illuminating method, wherein the interior illuminating assembly (10) comprises a light source (1) capable of emitting a light beam; and a micro-lens array (2) located downstream of the light source (1). The micro-lens array (2) comprises at least one projection array (21) composed of a plurality of micro-lens units (210). Projection templates of the plurality of micro-lens units (210) in the same projection array (21) are matched. The light beam is synthesized into an illumination projection by projection beams output through the projection templates of the plurality of micro-lens units (210) in the same projection array (21).

## Description

### Technical Field

This disclosure relates to a field of interior decoration, in particular to an interior illuminating assembly, an interior decoration system, a vehicle and an illuminating method.

### Background

There is an illuminating assembly in an interior decoration system of a vehicle, such as an automobile. The illuminating assembly generally comprises a reading lamp for providing reading illumination for passengers in the vehicle, and can also comprise a projection lamp for displaying some pattern icons, etc.

The inventor found that the interior illuminating assembly of the interior decoration system of the prior art have defects such as large volume.

### Summary

An object of the present invention is to provide an interior illuminating assembly.

Another object of the present invention is to provide an interior decoration system.

Another object of the present invention is to provide a vehicle.

Another object of the invention is to provide an illuminating method for an internal space of a vehicle.

An interior illuminating assembly according to one aspect of the present invention comprises a light source capable of emitting a light beam; and a micro-lens array located downstream of the light source. The micro-lens array comprises at least one projection array composed of a plurality of micro-lens units. Projection templates of the plurality of micro-lens units of the same projection array are matched. The light beam is synthesized into an illumination projection by the projection beams output through the projection templates of the plurality of micro-lens units in the same projection array.

In one or more embodiments of the interior illuminating assembly, a converging part, located downstream of the light source and upstream of the micro-lens array, is also comprised, which can receive and converge the light beam emitted by the light source and output a converging beam to the micro-lens array.

In one or more embodiments of the interior illuminating assembly, order of magnitude of dimension of the micro-lens unit is up to an order of 10⁻²mm.

In one or more embodiments of the interior illuminating assembly, a light source module comprising a plurality of light sources, and a micro-lens array comprising a plurality of projection arrays are comprised, wherein each projection array comprises a plurality of micro-lens units, and illumination projections corresponding to different projection arrays are different.

In one or more embodiments of the interior illuminating assembly, the light source module is a surface mount technology (SMT) LED array or a chip on board (COB) LED array, and the light source module comprises a plurality of LED lamps.

In one or more embodiments of the interior illuminating assembly, the LED lamp is a micro sub-millimeter LED (Mini LED) or a micron LED (Micro LED) with a chip dimension of 1 µm to 100 µm.

In one or more embodiments of the interior illuminating assembly, the plurality of projection arrays comprise a reading lamp projection array and a pattern lamp projection array.

In one or more embodiments of the interior illuminating assembly, the micro-lens unit comprises a first prism layer, a transparent substrate layer and a second prism layer successively distributed from upstream to downstream, and a projection template layer located between the first prism layer and the second prism layer is also comprised.

In one or more embodiments of the interior illuminating assembly, the projection template layer has a metal coating, and the metal coating has an etching pattern.

An interior decoration system according to one aspect of the present invention comprises an interior trim and the interior illuminating assembly described above. The interior illuminating assembly outputs an illuminating projection to the interior trim.

In one or more embodiments of the interior decoration system, the interior trim is an automobile interior trim, and the illumination projection output by the interior illuminating assembly can be projected to a passenger seat as a reading lamp, and/or project a display icon to an interior trim panel as a pattern lamp.

In one or more embodiments of the interior decoration system, the interior decoration system also comprises a posture sensor and a control unit. The posture sensor can sense a posture signal of a passenger and output it to the control unit. The control unit can output a corresponding control signal, according to the posture signal, to control the illuminating projection output by the interior illuminating assembly.

A vehicle according to one aspect of the present invention comprises an occupant compartment. The occupant compartment has the interior decoration system described above.

An illuminating method for an internal space of a vehicle, according to one aspect of the present invention, comprises: configuring a light source in the internal space of the vehicle to emit a light beam; and outputting an illumination projection by the light beam through a plurality of micro-lens units of at least one projection array of the micro-lens array, wherein the illumination projection is a synthesis of respective projections output by the plurality of micro-lens units when the light passing through.

In one or more embodiments of the illuminating method, the light beam passes through a plurality of projection arrays of the micro-lens array and outputs illumination projections to a passenger seat area and/or an interior trim panel area respectively.

The progressive effects of the present invention comprise but are not limited to that through the technical means of synthetic projection of the plurality of micro-lens units of the micro-lens array, the illuminating assembly is thin and easy to be arranged in the interior decoration system.

### Brief Description of the Drawings

The above and other features, properties and advantages of the present invention will become more obvious through the following description in combination with the accompanying drawings and embodiments. It should be noted that the accompanying drawings are only examples, which are not drawn according to the conditions of equal scale, and should not be used as a limitation on the protection scope actually required by the present invention, in which:
Fig. 1 is a schematic diagram of an interior illuminating assembly according to an embodiment.
Fig. 2 is a schematic diagram of an interior illuminating assembly according to another embodiment.
Fig. 3 is a schematic diagram of an interior illuminating assembly according to another embodiment.
Fig. 4 is a schematic cross-sectional view of a micro-lens array of an interior illuminating assembly according to an embodiment.
Fig. 5 is a schematic diagram of a micro-lens array of an interior illuminating assembly according to an embodiment.
Fig. 6 is a schematic diagram of an illuminating area of an interior illuminating assembly of an interior decoration system according to an embodiment.
Fig. 7 is a schematic diagram of an illuminating area of an interior illuminating assembly of an interior decoration system according to an embodiment.
Fig. 8 is a schematic diagram of the principle of synthesizing projection by an interior illuminating assembly according to an embodiment.

Part of the reference numerals:
10-Interior illuminating assembly
1-Light source
101-Light source module
2-Micro-lens array
21-Projection array
22-Reading lamp projection array
23-Pattern lamp projection array
231-Center console projection array
200- Center console
232-Instrument panel projection array
300-Instrument panel
210-Micro-lens unit
211-First prism layer
212-Projection template layer
213-Transparent substrate layer
214-Second prism layer
3- Converging part
40-Decorative panel
41-Transparent substrate
42-Semitransparent layer

### Detailed Description of Embodiments

A variety of different implementations or embodiments for implementing the subject technical proposal are disclosed below. In order to simplify the disclosure, specific examples of each element and arrangement are described below. Of course, these are only examples and do not limit the protection scope of the present invention.

In addition, the use of "one embodiment", "an embodiment", and/or "some embodiments" means a feature, structure or characteristic related to at least one embodiment of the present application. Therefore, it should be emphasized and noted that the "an embodiment" or "one embodiment" or "one or more embodiments" mentioned twice or more in different positions in this specification do not necessarily refer to the same embodiment. In addition, some features, structures or characteristics in one or more embodiments of the present application may be combined appropriately.

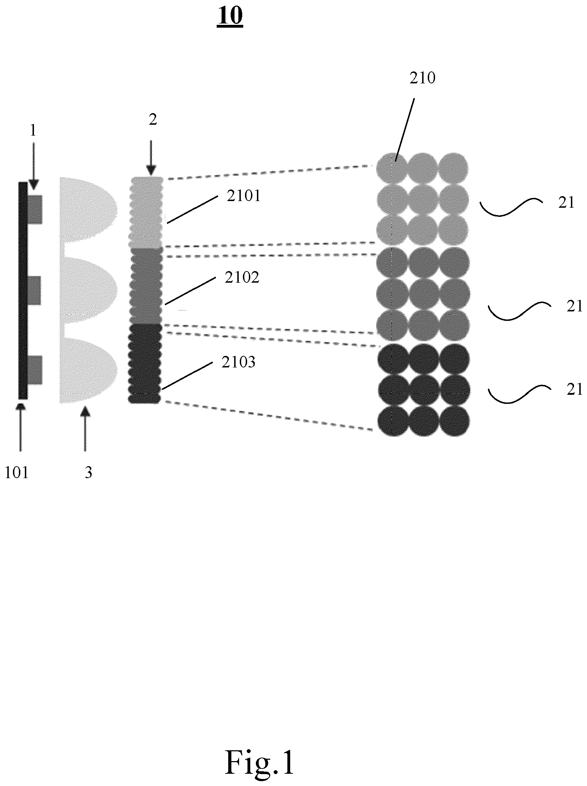

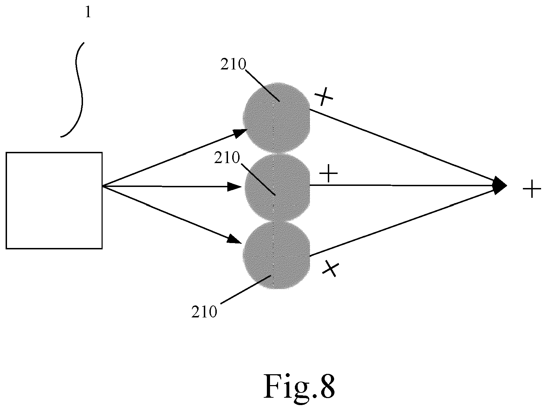

Referring to Fig. 1 to Fig.3, in some embodiments, the interior illuminating assembly 10 comprises a light source 1 and a micro-lens array 2. The light source 1 can emit a light beam to the micro-lens array 2. The micro-lens array 2 is located downstream of the light source 1. The micro-lens array 2 comprises at least one projection array 21 composed of a plurality of micro-lens units 210. The projection templates of the plurality of micro-lens units 210 comprised in the same projection array 21 are matched. The light beam is synthesized into an illumination projection by projection beams output through the projection templates of the plurality of micro-lens units 210 in the same projection array 21, and projected on an illuminated surface of an automobile interior trim. It should be explained that the structure on the right side of Fig. 1 to Fig. 3 is the structure of the micro-lens array 2 in another angle of view, rather than the projection of the output of the micro-lens array 2. The specific principle can refer to Fig. 8. Taking the projection as a "+" character as an example, the micro-lens array 2 has a projection array 21 corresponding to the "+" character. The projection templates of the micro-lens unit 210 of the projection array 21 can all be the same corresponding "+" character. The light beams emitted by the light source 1 pass through different micro-lens units 210 respectively. Although the output "+" character has a certain deflection due to different incident directions, however, the micro-lens unit 210 has a projection template that can adjust the projection direction. The projection templates of the micro-lens unit 210 at different positions are the same and are all "+" characters. The "+" characters output by each micro-lens unit 210 are synthesized to the projection position, and the projection image of "+" characters that can be observed by the user is synthesized at the projection position. Alternatively, the projection template of the micro-lens unit 210 of the projection array 21 can also be matched and combined to form the corresponding "+" character. For example, the projection template of some micro-lens units 210 is "-" character, and the projection template of some micro-lens units 210 is "|" character. Then, the matched and synthesized illumination projection is "+" character. The beneficial effect of the above embodiments are that through the technical means of synthetic projection of the plurality of micro-lens units of the micro-lens array, the illuminating assembly is thin, occupies a small volume and are easy to be arranged in a vehicle. For example, due to the small occupied volume, the interior illuminating assembly can be arranged on the side and back of the vehicle in addition to the interior ceiling of the vehicle where the traditional illuminating assembly is arranged on. Moreover, due to the thinness and small volume, it can also be constructed into a hidden layout structure embedded in an internal component of the vehicle.

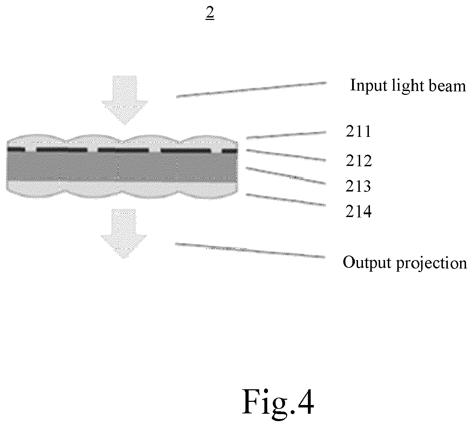

Referring to Fig. 4, in one or more embodiments, the structure of the micro-lens unit 210 of the micro-lens array 2 may comprise a first prism layer 211, a projection template layer 212, a transparent substrate layer 213 and a second prism layer 214 successively distributed from upstream to downstream. The first prism layer 211 is a converging prism, and the second prism layer 214 is a projection prism. The projection template layer 212 is corresponding to the projection output by the projection array 21. Taking the above projection "+" character as an example, the projection template layer 212 may be a metal coating with an etching pattern corresponding to the "+" character. The metal coating of the projection template layer 212 may be a physical vapor deposition (PVD) coating, and the coating metal may be a common PVD coating metal such as chromium, silver, indium and tin. It can be understood that the position of the projection template layer 212 is not limited to between the first prism layer 211 and the transparent substrate layer 213. For example, it can also be between the transparent substrate layer 213 and the second prism layer 214, or even embedded in the transparent substrate layer 213, as long as it is between the first prism layer 211 and the second prism layer 212. In some cases, the projection template layer can be empty. For example, when it is used as a reading lamp function, the output synthetic projection can be without patterns or characters, and the synthetic projection can be a light spot. Then the corresponding projection template layer is empty. In addition, the structure of the second prism layer 212 of different micro-lens units 210 shown in Fig. 4 is basically the same, but not limited to this. The structure of the second prism layer 212 of different micro-lens units 210 can also be different to adjust the direction of the output projection beam of different micro-lens units 210. Therefore, the specific structure of the second prism layer 212 of different micro-lens units 210 can be adjusted according to the actual projection needs. The dimension of the micro-lens unit 210 is up to the order of tens of microns, that is, the order of 10⁻²mm. The minimum dimension of the micro-lens unit 210 is limited by the manufacturing process. At present, the most advanced nano process can make the minimum dimension of the micro-lens unit 210 in a few nanometers. The dimension described here means a three-dimensional dimension. Taking the structure of micro-lens unit 210 similar to cube as an example, the length and width are at most tens of microns and the height is at most tens of microns. If micro-lens unit 210 is similar to spherical structure, its diameter is up to tens of microns.

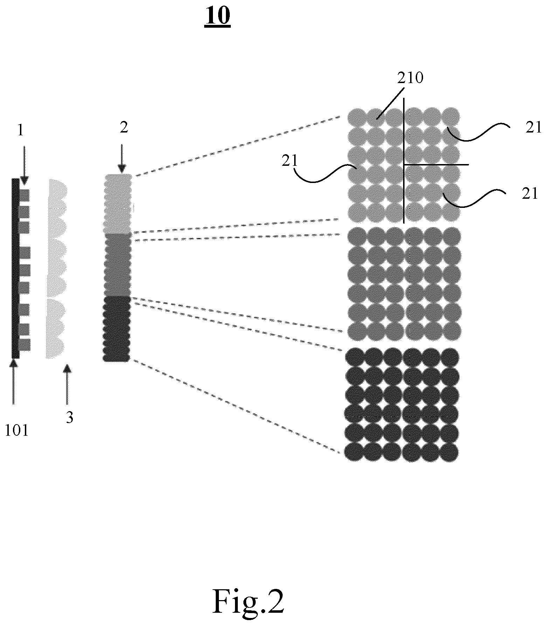

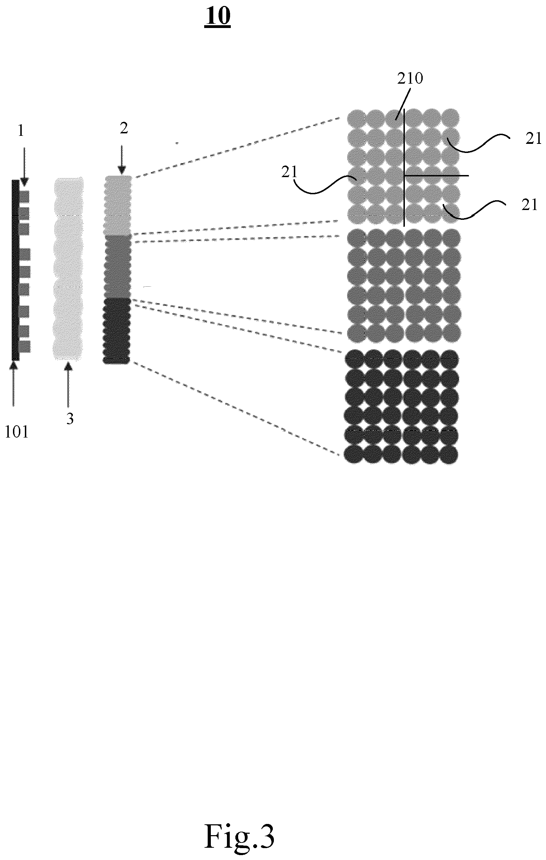

Referring to Fig. 1 to Fig.3, in some embodiments, the interior illuminating assembly 10 may also comprise a converging part 3, which is located downstream of the light source 1 and upstream of the micro-lens array 2, can receive and converge the light beam emitted by the light source 1, and output a converging beam to the micro-lens array 2. It can be understood that when the light source 1 is a relatively divergent light source, such as a light emitting diode (LED) light source, the converging part 3 generally needs to converge the light beam, emitted by the light source 1, into a converging beam, and output it to the downstream micro-lens array 2. The converging part 3 can be a light source prism structure integrated with the light source 1, or it can be separated from the light source 1. It can be understood that when the light beam emitted by the light source has strong convergence, for example, the light source is a laser light source and emits a laser beam, the converging part 3 can be omitted. In the embodiments shown in Fig. 1 and Fig. 2, the converging part 3 can be a common converging part prism structure, and each light source 1 corresponds to one converging part 3. For example, the embodiment shown in Fig. 1 comprises three light sources 1 corresponding to three converging parts 3, and the embodiment shown in Fig. 2 comprises three light sources 1 corresponding to three converging parts 3. In the embodiment shown in Fig. 3, the structure of the converging part 3 is similar to that of the micro-lens array 2 and is also composed of a plurality of micro-lens units. In this way, the interior illuminating assembly with the converging part 3 is further thinned by taking advantage of the thinness of the micro-lens array.

With continued reference to some embodiments shown in Fig. 1 to Fig.3, the interior illuminating assembly 10 has a light source module 101, which comprises a plurality of light sources 1. The light source module 101 may be a surface mount technology (SMT) LED array or a chip on board (COB) LED array, comprising a plurality of LED lamps. The LED lamp is a micro submillimeter LED (Mini LED) or a micron LED (Micro LED) with a chip dimension of 1µm to 100µm. It can be understood that the structure of the micro-lens array and synthetic projection can make the volume of the corresponding light source 1 and light source module 101 small, and the dimension of the Mini LED and the Micro LED can further miniaturize the interior illuminating assembly.

In the embodiment of Fig. 1, the micro-lens array 2 comprises three projection arrays, which are projection arrays 2101, 2102 and 2103 respectively, and corresponds to three light sources 1. In the embodiment shown in Fig. 2, the micro-lens array 2 comprises nine projection arrays corresponding to nine light sources 1. The number of micro-lens units comprised in each projection array can be the same or different, which is not limited to this. In short, the micro-lens array 2 shown in Fig. 2 can provide more kinds of illumination projection.

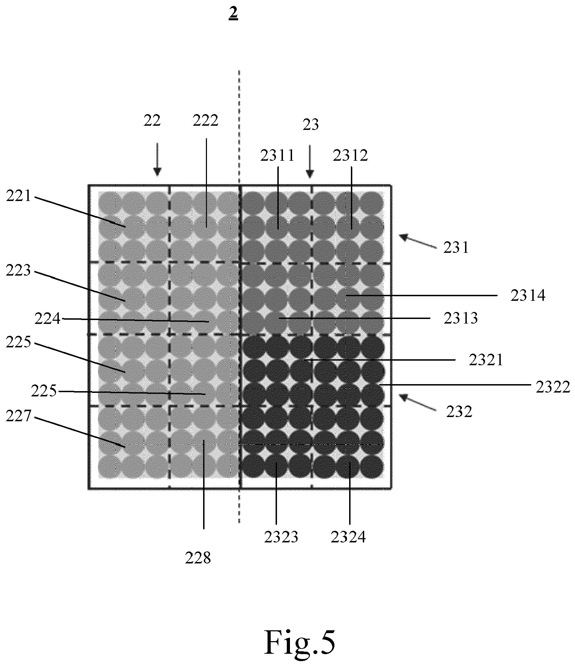

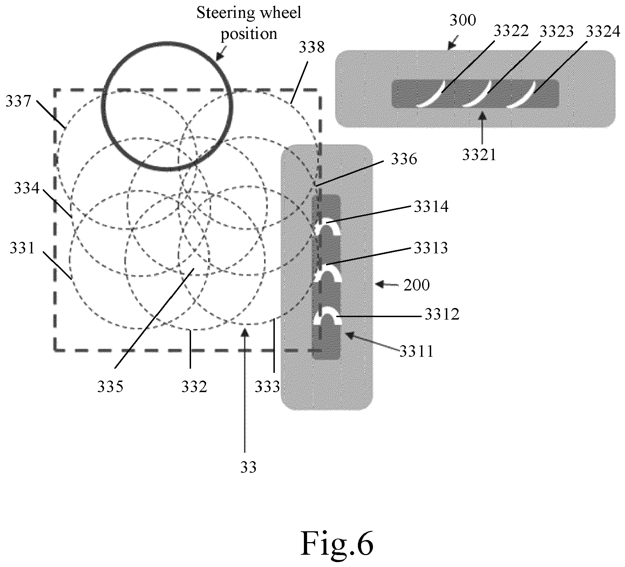

Referring to Fig. 5 and Fig.6, in an embodiment, the automotive interior decoration system comprises an interior trim and an interior illuminating assembly. The micro-lens array 2 comprises a plurality of projection arrays 21, comprising a reading lamp projection array 22 and a pattern lamp projection array 23. It can be understood that the corresponding function of the reading lamp projection array 22 is the reading lamp in the automotive interior decoration system, and the illumination projection can be a light spot, projecting to the direction of a passenger seat. As described above, the projection template layer of the corresponding micro-lens unit 2 is empty. Combined with Fig. 5 and Fig. 6, the reading lamp projection array 22 can comprise eight projection arrays 221, 222, 223, 224, 225, 226, 227 and 228, respectively corresponding to eight reading lamp areas 331, 332, 333, 334, 335, 336, 337 and 338 of the projection area 33 shown in Fig. 6. A beneficial effect thereof can be that the projection area can be flexibly adjusted to adapt to different sitting positions and viewing angles of a passenger, so as to improve the reading experience of the passenger under the reading lamp. It is not only for the reading experience of a single passenger with different sitting postures and viewing angles, but also for a plurality of passengers. For example, when two or more passengers side by side need to read together, a light beam should be output to the projection array corresponding to the middle area of the plurality of passengers and the reading lamp area, for example, to the projection array 223, 226, 228 and the reading lamp area 333, 336, 338 close to the middle area of two passengers, to optimize the reading experience of the plurality of as much as possible. It can be seen from the above that the output illumination projection can change dynamically. For example, when the driver among the passengers needs to read, the light beam is output to the projection array 221, 222, 224 and 225 corresponding to the corresponding areas 331, 332, 334 and 335 of the passenger. Then, if the passengers need to read side by side, the light beam is output to the projection array corresponding to the middle area of the plurality of passengers and the reading lamp areas. For example, it is output to the projection arrays 223, 226 and 228 corresponding to the middle areas of the two passengers and the reading lamp areas 333, 336 and 338. In addition, by adjusting the projection area in this way, the projection or reflection of reading light to the front windshield can also be minimized to avoid interference to the driver. Therefore, the reading light may also be turned on during driving.

Continuing to refer to the examples shown in Fig. 5 and Fig. 6, the pattern lamp projection array 23 can correspond to a plurality of projection arrays. For example, it can be projected to the interior trim panel to display an operation key or a status. The pattern projection lamp array 23 may comprise a center console projection array 231 of the center console 200, comprising four projection arrays 2311, 2312, 2313 and 2314. The instrument panel projection array 232 of the instrument panel 300 of the interior trim, comprising four projection arrays 2321, 2322, 2323 and 2324. The illumination projection output by the projection arrays 2311, 2312, 2313 and 2314 of the center console projection array 231, as shown in Fig. 6, can comprise pattern background 3311 and character images 3312, 3313 and 3314. For example, it can be characters of different driving modes, such as energy-saving mode, normal mode and sports mode. Then the character images 3312, 3313 and 3314 can correspond to "ECO", "Normal" and "Sport" respectively. The brightness of the character image can be adjusted by adjusting the brightness of the corresponding light source. Similarly, the illumination projection output by the projection arrays 2321, 2322, 2323 and 2324 of the instrument panel projection array 232 can comprise pattern background 3321 and character images 3321, 3323 and 3324. For example, it can be the control command of the air conditioning control panel, such as temperature rise, temperature drop and automatic temperature adjustment, and the character images 3321, 3323 and 3324 can be "+", "-" and "AUTO". A comparison proposal is that a film with ink printed character image is arranged on the surface of the control panel, and the ink printed character image is displayed through the projection spot. The beneficial effect of the proposal of the above embodiment on the comparison proposal is that the character image is directly projected to the control panel, which saves the cost of the film compared with the comparison proposal. In some embodiments, on basis of the projected character image, the control panel can also have a touch film, so that the illuminated projected character image has a touch function. The comparison proposal can also set the display film to have touch function. The beneficial effect of the embodiment on the comparison proposal is that since the character image is directly projected to the control panel with the touch film, the touch film can be a thin touch film, while the touch film in the comparison proposal needs both ink printing and touch function, resulting in a large number of layers and high cost of the touch film.

It can be understood that the beneficial effects of the above embodiment comprise the integration of functions of a reading lamp and a pattern projection lamp in the integrated interior illuminating assembly, which makes the structure of the illuminating assembly compact and further convenient for layout in the automotive interior space.

Further, in some embodiments, the controlling of the interior illuminating assembly 10 in the interior decoration system comprises controlling the interior illuminating assembly 10 to output a reading lamp projection and/or a pattern lamp projection and dynamic changes of both through a gesture operation. The interior decoration system comprises a posture sensor and a control unit. The posture sensor can sense a posture signal of a passenger and output it to the control unit. At this time, the control unit outputs a corresponding control signal according to the posture signal to control the projected beam output by the interior illuminating assembly. For example, a gesture sensor senses a gesture signal and output it to the control unit. For example, the gesture waving to the left is to turn on a reading lamp, and the control unit outputs a control signal to the light source of the illuminating assembly 10 to output a light beam to the reading lamp projection array 22. For example, the gesture waving to the right is to turn on a picture lamp, and the control unit outputs a control signal to the light source of the illuminating assembly 10 to output a light beam to the pattern lamp projection array 23, and turn off the light source that outputs to the reading lamp projection array 22. In this way, the use experience of illuminating assembly can be further improved and the interior decoration system can be further intelligent.

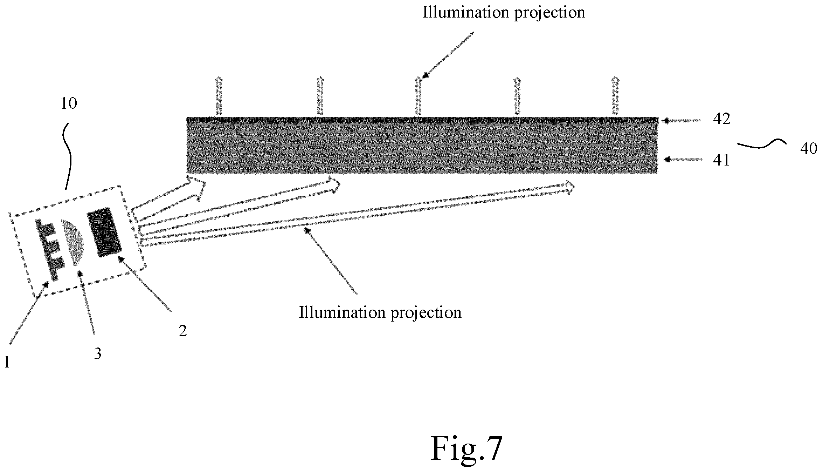

Referring to Fig. 7, in one or more embodiments, the interior illuminating assembly 10 may be located at the bottom, side or back in addition to the roof. The embodiment shown in Fig. 7 is an example of back projection. The illumination projection of the interior illuminating assembly 10 is output to a decorative (Deco) panel 40, which comprises a transparent substrate 41 and a semitransparent layer 42, so that the image transmitted from the decorative panel 40 shows the illumination projection of the interior illuminating assembly 10. It can be seen from some embodiments of Fig. 5, Fig. 6 and Fig. 7 that the beneficial effect of adopting the interior illuminating assembly 10 in an automotive interior decoration system is that the layout position thereof can be flexibly arranged, not limited to the interior ceiling position, so that the overall layout of the automotive interior decoration system can be more flexible with a high space utilization rate.

As described above, an illuminating method for an interior space of a vehicle may comprise:
configuring a light source in the internal space of the vehicle to emit a light beam, and outputting an illumination projection through a plurality of micro-lens units of at least one projection array of the micro-lens array, wherein the illumination projection is a synthesis of respective projections output by the plurality of micro-lens units when the light passing through.

Taking the embodiment described above as an example, the light source 1 can emit a light beam to the micro-lens array 2. The micro-lens array 2 is located downstream of the light source 1. The micro-lens array 2 comprises at least one projection array 21 composed of a plurality of micro-lens units 210. The projection templates of the plurality of micro-lens units 210 comprised in the same projection array 21 are matched. The light beam outputs the synthetic projection through the projection templates of the plurality of micro-lens units 210 in the same projection array 21.

In some embodiments, the illuminating method may also comprise outputting illumination projections to a passenger seat area and/or a display panel area through a plurality of projection arrays of the micro-lens array. Taking the embodiment described above as an example, the illumination projection is output to the passenger seat area as a reading lamp, and/or the illumination projection is output to the display panel area as a pattern projection lamp of a button that displays a state or an operation.

It can be understood that the interior illuminating assembly of the above embodiment takes an interior illuminating assembly of a vehicle interior decoration system as an example, but is not limited to this. For example, the interior decoration system is not limited to the interior decoration system of the vehicle, but also an interior decoration system of an occupant compartment of a ship, a train, an aircraft and other vehicles. The occupant compartment can comprise a passenger compartment and a cockpit. The interior system is not even limited to the interior system of vehicles, but also an interior system of a venue, an auditorium and other occasions, as long as a lighting projection is needed.

As described above, the beneficial effects of the interior illuminating assembly, the interior decoration system, the vehicle and the illuminating method described in the above embodiments comprise but are not limited to:
1. Through the technical means of synthetic projection of the plurality of micro-lens units of the micro-lens array, the illuminating assembly is thin and easy to be arranged in the interior decoration system. For example, due to the small occupied volume, the interior illuminating assembly can be arranged on the side and back of a vehicle in addition to the interior ceiling of the vehicle where the traditional illuminating assembly are arranged on. Moreover, due to the thinness and small volume thereof, it can also be constructed into a hidden layout structure embedded in an internal component of the vehicle.
2. Improve the using experience of users of the interior decoration system, specifically the illuminating experience in the occupant compartment of the vehicle, especially the illuminating experience of reading together by a plurality of passengers.
3. The illumination projection is used as a pattern projection lamp to directly display an operation key, which reduces the cost of the interior decoration system.
4. The illuminating assembly can meet the needs of reading lamp and pattern projection lamp at the same time, and has a compact structure, which makes the internal space utilization of the interior decoration system and the vehicle high.

Although the above embodiments of the present invention are disclosed as above, they are not used to limit the present invention. Any person skilled in the art can make possible changes and modifications without departing from the spirit and scope of the invention. Therefore, any modifications, equivalent changes and embellishments made to the above embodiments according to the technical essence of the present invention without departing from the technical proposal of the disclosure fall within the protection scope defined in the claims of the present invention.

## Claims

1. An interior illuminating assembly (10), which is **characterized by** comprising:
a light source (1), capable of emitting a light beam; and
a micro-lens array (2), located downstream of the light source (1), wherein the micro-lens array (2) comprises at least one projection array (21) composed of a plurality of micro-lens units (210), projection templates of the plurality of micro-lens units (210) in the same projection array (21) are matched, and the light beam is synthesized into an illumination projection by projection beams output through the projection templates of the plurality of micro-lens units (210) in the same projection array (21).

2. The interior illuminating assembly (10) of claim 1, which is **characterized by** also comprising a converging part (3), which is located downstream of the light source (1) and upstream of the micro-lens array (2), can receive and converge the light beam emitted by the light source (1), and output a converging beam to the micro-lens array (2).

3. The interior illuminating assembly (10) of claim 1 or claim 2, which is **characterized in that** order of magnitude of dimension of the micro-lens unit (210) is up to an order of 10⁻²mm.

4. The interior illuminating assembly (10) of any of the preceding claims, which is **characterized by** comprising:
a light source module (101), comprising a plurality of light sources (1);
the micro-lens array (2), comprising a plurality of projection arrays (21), wherein each projection array (21) comprises a plurality of micro-lens units (210), and illumination projections corresponding to different projection arrays are different.

5. The interior illuminating assembly (10) of claim 4, which is **characterized in that** the light source module (101) is a surface mount technology, SMT, LED array or a chip on board, COB, LED array, and the light source module (101) comprises a plurality of LED lamps.

6. The interior illuminating assembly (10) of claim 5, which is **characterized in that** the LED lamp is a micro submillimeter LED, Mini LED, or a micron LED, Micro LED, with a chip dimension of 1µm to 100µm.

7. The interior illuminating assembly (10) of any of claims 4 to 6, which is **characterized in that** the plurality of projection arrays (21) comprise a reading lamp projection array (22) and a pattern lamp projection array (23).

8. The interior illuminating assembly (10) of the preceding claims, which is **characterized in that** the micro-lens unit (210) comprises a first prism layer (211), a transparent substrate layer (213) and a second prism layer (214) successively distributed from upstream to downstream, and a projection template layer (212) located between the first prism layer (211) and the second prism layer (214) is also comprised.

9. The interior illuminating assembly (10) of claim 8, which is **characterized in that** the projection template layer (212) has a metal coating, and the metal coating has an etching pattern.

10. An interior decoration system , which is **characterized by** comprising an interior trim and the interior illuminating assembly (10) of any one of claims 1-9, wherein the interior illuminating assembly (10) outputs an illuminating projection to the interior trim.

11. The interior decoration system of claim 10, which is **characterized in that** the interior trim is an automobile interior trim, and the illumination projection output by the interior illuminating assembly can be projected to a passenger seat as a reading lamp (22), and/or project a display icon to an interior trim panel as a pattern lamp (23).

12. The interior decoration system of claim 10 or claim 11, which is **characterized in that** the interior decoration system also comprises a posture sensor and a control unit, the posture sensor can sense a posture signal of a passenger and output it to the control unit, and the control unit can output a corresponding control signal, according to the posture signal, to control the illumination projection output by the interior illuminating assembly (10).

13. A vehicle, which is **characterized by** comprising an occupant compartment, wherein the occupant compartment has the interior decoration system of any one of claims 10-12.

14. An illuminating method for an internal space of a vehicle, which is **characterized by** comprising:
configuring a light source in the internal space of the vehicle to emit a light beam; and
outputting an illumination projection by the light beam through a plurality of micro-lens units (210) of at least one projection array (21) of the micro-lens array (2), wherein the illumination projection is a synthesis of respective projections output by the plurality of micro-lens units (210) when the light passing through.

15. The illuminating method of claim 14, which is **characterized in that** the light beam passes through a plurality of projection arrays (21) of the micro-lens array (2) and outputs illumination projections to a passenger seat area and/or an interior trim panel area respectively.
